# EUROPEAN PATENT APPLICATION

(11) **EP 1 728 543 A2**
(43) Date of publication of application: **06.12.2006**
(21) Application number: 06007668.4
(22) Date of filing: 12.04.2006
(51) Int. Cl.: B01D 39/16, B01D 29/27

(54) **Filtration element having a variable density sidewall**

(30) Priority: 19.04.2005 US 672894 P
(71) Applicant: Howard W. Morgan, Filter Specialists, Incorporated, Michigan City, Indiana 46361 (US)
(72) Inventor: Howard W. Morgan, Filter Specialists, Incorporated, Michigan City, Indiana 46361 (US)
(74) Representative: Boyce, Conor

(57) **Abstract**

A filtration element formed of overlapping fibrous strands or components. Those fibrous strands at the side of the filtration element which first receives the fluid flow being of one thickness and those fibrous strands at the side of the filtration element where the fluid flow exits being of a thickness substantially less than the one thickness of the strands at the opposite sidewall of the element.

## Description

This invention relates to a filtration element for fluids, either liquid or gas, and will have application to bag type filters.

It is an object of this invention to provide a filtration element which is of economical construction and which is of efficient operation.

Still another object of this invention is to provide a filtration element which is for fluids and which provides for more even distribution of filtered particulate matter throughout the thickness of the element.

The present invention provides a filtration element as claimed in claim 1.

Preferably, the filtration element is formed of overlapping fibrous strands or components with the strands varying in diameter or thickness, the largest of which is at the side of the filter which first receives the fluid flow for filtration and the smallest of which is at the opposite side of the filter where the fluid exits after passing through the filtration element. Further, the side of the filter which first receives the fluid flow will generally be more rigid than the opposite side of the filter so as to provide a substantially incompressible surface.

The fluid may be one of a liquid or a gas.

Embodiments of the invention will now be described by way of example, with reference to the accompanying drawings, in which:
Figure 1 is a fragmentary perspective view showing an example of the apparatus which can be used to make the filtration element of this invention.
Figure 2 is a side view of a filter element in the form of a bag having a portion of the bag sidewall broken away to illustrate in cross-section the filtration strands forming the sidewall of the filter bag.
Figure 3 is a side view of the filter bag showing in illustrative form the varying thicknesses of the filtration strands.

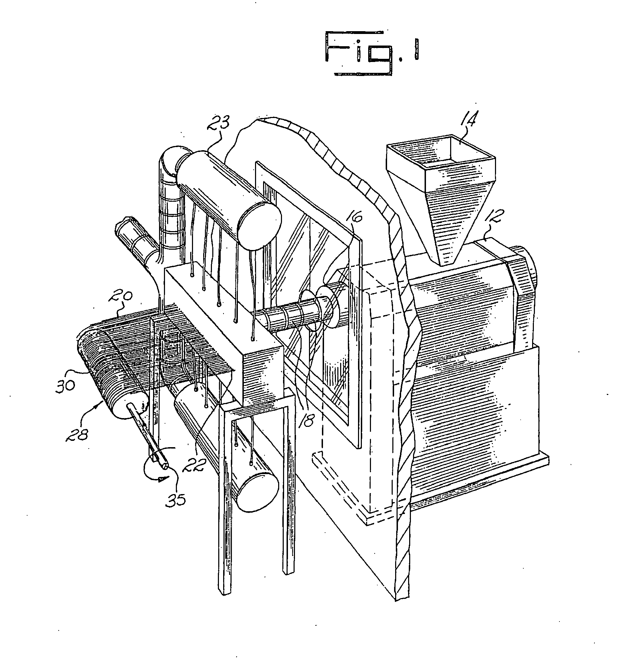

This invention may be best understood by the following descriptions and the workings of the equipment which is used to produce the filter element, seen in the drawing as a filter bag 10. As illustrated in Figure 1, a quantity of material, preferably polypropylene or other thermoplastic materials capable of producing filaments when molten and air dried, is introduced into an extruder 12 at hopper 14 and is fed through a nozzle 16. A plurality of ring heaters 18 circumscribe nozzle 16 and serve to produce heat sufficient to liquefy the thermoplastic material as it flows through the nozzle. Nozzle 16 terminates in a plurality of laterally spaced discharge outlets 22 through which the thermoplastic material in its molten state is propelled in melted and fibrous strands 20 by heated air from manifolds 23 toward a mandrel 28. Mandrel 28 may be formed from metal, wood or similar material and resembles in its outer configuration the intended shape of the filter bag 10 to be produced. Mandrel 28 is rotated about an axis 35 within the flow path of the fibrous strands 20 from nozzle discharge outlets 22. Normally, mandrel 28 is placed between 1 (300mm) to 3 feet (900mm) from outlets 22 and rotated at a constant speed such as between 30 to 80 rpm. The fibrous material or strands 20 are sufficiently cooled as they reach the mandrel 28 so as to be formed about the mandrel in layers.

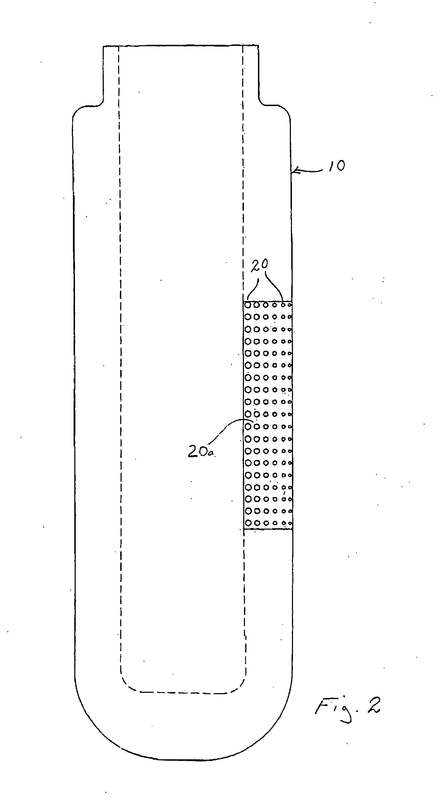

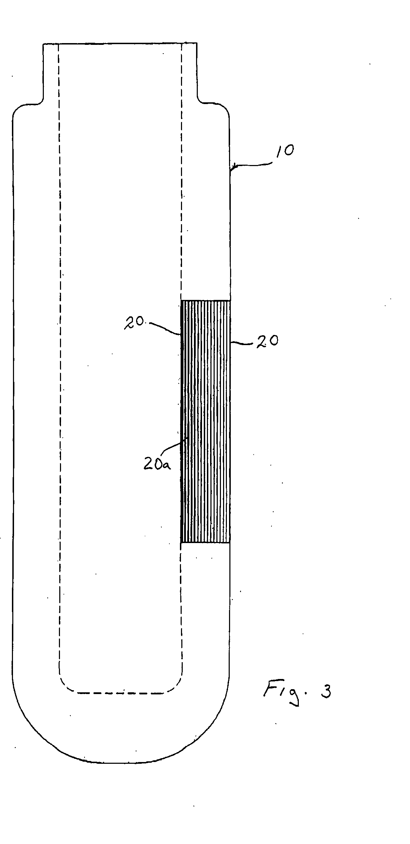

In this invention, the diameters of the strands 20 are varied as the thickness of the sidewall 32 of bag 10 increases. This is best illustrated in viewing figures 2 and 3 where a section of the sidewall of the filter bag has been broken away for illustrative purposes. In figure 2 the strands 20 are shown in cross-section, the largest diameter strands being at the inside of the bag and the smallest diameter of the strands being at the outside of the bag with the fluid flow through the bag being from the inside towards the outside of the bag. In figure 3, there is shown in illustrative form the varying thickness of the strands 20 with the strands becoming progressively thinner from the inside to the outside of the bag in the direction of fluid flow through the bag. In this manner, the outer margin of the sidewall of the bag will have its strands more compactly layered so as to increase the degree of filtration as the outer edges of the bag are reached. Thus, the larger particulate matter being filtered from the fluid will first become entrained within the filter bag closer to the inside of the bag with the smaller particulate matter becoming entrained closer to the outside of the bag. This will produce more even distribution of the filtered particulate matter throughout the bag.

The thickness of the strands 20 of bag 10 may range from 50 to 200 microns towards the inside of the bag and progressively become smaller in transverse dimension to .5 microns at the outside surface of the bag with the bag being approximately ¾ (19mm) to 1 inch (25mm) thick. The precise thickness or transverse dimension of the strands of the fibrous material and thickness of the bag can vary depending upon the type of material intended to be filtered and the size of the filter bag.

In producing filter bag 10, the thicker strands are first wound upon the mandrel and then as the bag's thickness progressively increases, the temperature produced by heaters 18 can be increased so as to make the thermoplastic material more molten with the air pressure produced at manifolds 23 increased, thus increasing the length of the strands and reducing their transverse dimension. In this manner, by selectively increasing the temperature of the molten thermoplastic material and/or increasing the air pressure by which the molten thermoplastic material is driven through and propelled from the nozzles, the thickness of the strands can be selectively varied as they are wound upon the mandrel to produce the sidewall of the filter bag or cartridge depending upon the type of filtration element being produced.

Also, in addition to varying the thickness of the strands, by varying the temperature of the molten thermoplastic material and/or varying the volume of air by which the material is driven through and propelled from the nozzles, the stiffness of the strands can be increased so that the inner wall section 20a of the filter bag becomes stiff or rigid. Normally bag side walls substantially collapse during use due to the fluid pressure within the bag. This reduces the bag's permeability and filtering capacity. By rigidifying a wall section of the bag at the side where the fluid first contacts, the bag strands remain open to provide intervals or voids between the strands to catch or entrain filtered particles. The depth of wall section 20a can vary, even extending the entire thickness of the filter bag, depending upon the filtration characteristics desired.

Where the filter element is employed with liquids, it is anticipated that for a liquid pressure of 25 psi (172kPa) within a filter bag having a substantially rigid wall section 20a formed of strands having spaces or voids between strands of 25 or greater microns there will be approximately a 15% or less reduction in bag wall thickness. Also, it is anticipated that for a liquid pressure of 15 psi (103kPa) within the filter bag having a substantially rigid wall section 20a with voids between the strands of 10 or less microns there will be approximately a 50% or more reduction in bag wall thickness.

The invention is not to be limited to the details above given but may be modified within the scope of the appended claims.

## Claims

1. A filtration element comprising a sidewall part, said sidewall part having a first side which the fluid flow through the element first contacts and a second side from which said fluid flow exits said element, said sidewall part including overlapping fibrous strands, those said strands at said sidewall part first side being of one thickness and those said strands at said sidewall part second side being of a thickness substantially less than the thickness of said sidewall part first side.

2. The filtration element of claim 1 wherein said strands vary progressively in transverse dimension from said sidewall part first side to said sidewall part second side.

3. The filtration element of claim 1 or 2 wherein said strands vary regressively in rigidity from said sidewall part first side toward said sidewall part second side to form a substantially rigid sidewall part at said first side.

4. A method of forming a filtration element comprising the steps of:
a. expelling thermoplastic material through a nozzle by gas pressure to form strands of fibrous material;
b. heating said material prior to its expulsion from said nozzle;
c. forming said strands of fibrous material into a sidewall of said filtration element; and
d. varying the thickness of said strands with the thicker of the strands being at the side of the filtration element where the fluid flow through the element first flows.

5. The method of claim 4 wherein step a. includes varying the gas pressure through said nozzle to vary the thickness of said strands.

6. The method of claim 4 wherein step b. includes varying the temperature of said material prior to its expulsion from said nozzle to vary the thickness of said strands.

7. The method of claim 4 wherein step d. includes varying the stiffness of the strands at the side of the filtration element where the fluid flow through the element first flows.

8. The method of any previous claim wherein said fluid is one of a liquid or a gas.
